# EUROPÄISCHE PATENTSCHRIFT

(11) **EP 1 806 251 B1**
(45) Veröffentlichungstag und Bekanntmachung des Hinweises auf die Patenterteilung: **31.03.2010**
(21) Anmeldenummer: 07000010.4
(22) Anmeldetag: 02.01.2007
(51) Int. Cl.: B60J 7/02

(54) **Dach für ein Kraftfahrzeug**
Roof for a motor vehicle
Toit pour véhicule automobile

(30) Priorität: 05.01.2006 DE 102006000847
(43) Veröffentlichungstag der Anmeldung: 11.07.2007
(73) Patentinhaber: Magna Car Top Systems GmbH, 74321 Bietigheim-Bissingen (DE)
(72) Erfinder: Salz, Wolfram, 74343 Sachsenheim (DE); Halbweiss, Thomas, 71686 Remseck (DE); Rösler, Matthias, 70180 Stuttgart (DE)

(56) Entgegenhaltungen:
- EP-A- 1 348 585
- EP-A1- 1 291 216
- EP-A2- 1 254 800
- US-A1- 2003 151 275

## Beschreibung

Die Erfindung bezieht sich auf ein Dach für ein Kraftfahrzeug, insbesondere einen Personenwagen nach dem Oberbegriff des Patentanspruchs 1.

Ein bekanntes Fahrzeugdach, DE 36 44 493 A1, ist längsverschiebbar in einem Aufbau angeordnet. Das Fahrzeugdach ist mit in Fahrzeuglängsrichtung verlaufenden Führungselementen versehen, die in Führungsschienen des Aufbaus eingreifen. Dabei wirken Ränder des Fahrzugdachs mit Dichtkörpern zusammen, die in Aufnahme des Fahrzeugdachs festgelegt sind.

Aus der US 4,241,948 geht ein Schiebedach für einen Personenkraftwagen hervor, das an Führungsschienen befestigt ist. Die Führungsschienen verlaufen mit parallelem Abstand beiderseits einer Längsmittelebene des Personenkraftwagens.

Es ist Aufgabe der Erfindung einen verschiebbaren Deckel für ein Dach eines Kraftfahrzeugs zu schaffen, der bei einfacher Bauweise und funktionsgerechter Bewegung sich durch eine vorbildliche Dichtwirkung in einem Aufbau des Kraftfahrzeugs auszeichnet.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass der zwischen Deckel und Aufbau d.h. aufrechten ersten und zweiten Dichtabschnitten angeordnete Dichtkörper durch Längsbewegung des Deckels über parallele Führungsschienen und mittels durch Keillinien hervorgerufener Keilwirkung eine Arbeitsstellung und eine Ruhestellung einnimmt. Dabei erfüllt der Dichtkörper in der Arbeitsstellung eine definierte Dichtfunktion, wogegen er in der Ruhstellung entspannt ist. Der erste fest am Aufbau angebrachte Dichtabschnitt verläuft bspw. entlang einer der Keillinien, und der zweite Dichtabschnitt ist am Deckel gehalten. Hierzu erstreckt sich der zweite Dichtabschnitt -von oben auf den Deckel gesehen- im spitzen Winkel zu einer Längsebene, die parallel zu einer Mittellängsebene des Personenwagens verläuft. Darüber hinaus ist es baulich vorteilhaft, wenn der Dichtkörper am ersten Dichtabschnitt in Lage gehalten wird, der erste Dichtabschnitt Bestandteil eines Trägers des Aufbaus ist, der Träger in etwa eine U-förmige Grundform aufweist und der Träger zur Aufnahme der Führungsschiene ausgebildet ist. Schließlich ist eine Trägerinnenstruktur mit dem Deckel verbunden und letztere mit einem Winkelelement versehen, dessen freies Ende mit einem Gleitprofil in eine U-förmige Aufnahme der Führungsschiene hineinragt.

In der Zeichnung wird ein Ausführungsbeispiel der Erfindung gezeigt, das nachstehend näher erläutert wird.

Es zeigen
Fig. 1 eine Ansicht von oben auf einen Personenwagen,
Fig. 2 einen Schnitt nach der Linie II-II der Fig. 1 in größerem Maßstab.
Fig. 3 eine schematische Einzelheit X der der Fig. 2 in größerem Maßstab.

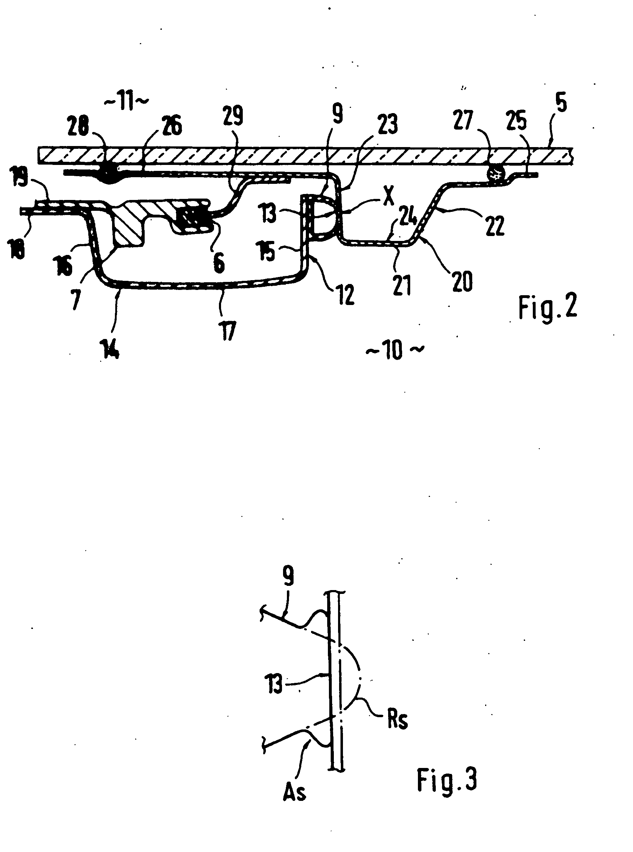

Ein lediglich teilweise dargestellter Personenwagen 1 weist einen Aufbau 2 mit einem Dach 3 auf, in das ein in Fahrzeuglängsrichtung A-A verschiebbarer und eine Aufbauöffnung 4 verschließbarer Deckel 5 integriert ist. Der Deckel 5 arbeitet unter Zwischenschaltung von Führungselementen 6 mit am Aufbau 2 befestigten Führungsschienen 7 und 8 zusammen, die mit parallelem Abstand zu einer Mittellängsebene B-B ausgerichtet sind. Zwischen Deckel 5 und dem Aufbau 2 ist ein Dichtkörper 9 wirksam -Fig. 2-, der sicherstellt, dass ein Fahrgastraum 10 des Personenwagens 1 gegen Eindringen von unerwünschten Medien von einer besagten Personenwagen 1 umgebenden Außenseite 11 aus weitgehend geschützt ist.

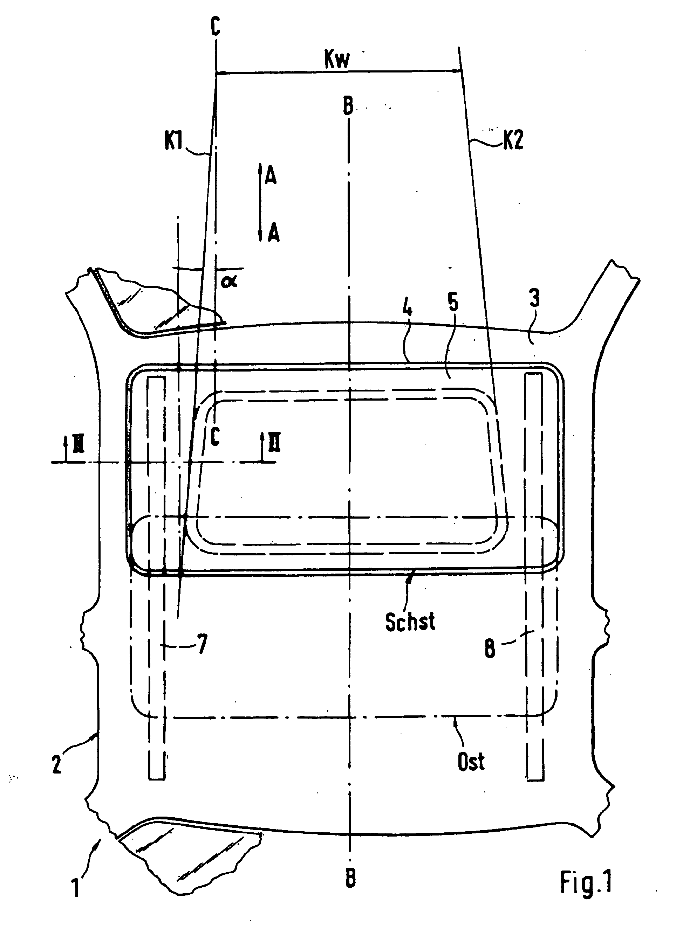

Der Dichtkörper 9 ist zwischen einem ersten Dichtabschnitt 12 und einem zweiten Dichtabschnitt 13 angeordnet, die einen im Personenwagen 1 aufrechten vorzugsweise senkrechten Verlauf aufweisen. Durch Verschieben des Deckels 5 in Fahrzeuglängsrichtung A-A entlang der die Führungselemente 6 aufnehmenden Führungsschienen 7 und 8 des Aufbaus 2 und eine gezielte durch die Dichtabschnitte 12 und 13 einschließenden Keillinien Kl 1 und Kl 2 hervorgerufene Keilwirkung Kw nimmt der Dichtkörper 9 eine Arbeitsstellung As oder eine Ruhestellung Rs ein -Fig. 3- In der Arbeitsstellung As befindet sich der Deckel 5 in der Schließstellung Schst; in der Ruhestellung in der Offenstellung Ost -Fig. 1-.

Der erste Dichtabschnitt 12 ist fest mit dem Aufbau 2 verbunden, und erstreckt sich entlang der Keillinie K1. Dagegen ist der zweite Dichtabschnitt 13, der parallel zur Keillinie K1 ausgerichtet ist, am Deckel 5 befestigt. Von oben auf den Deckel 5 gesehen ist der zweite Dichtabschnitt 13 im spitzen Winkel ά zu einer Längsebene C-C ausgerichtet, die sich parallel zur Mittellängsebene B-B erstreckt. Der Winkel ά kann innerhalb konstruktiver Grenzen frei gewählt werden, jedoch wenn er zwischen 0,5° und 3° beträgt ergeben sich günstige bauliche und funktionale Voraussetzungen.

Im Ausführungsbeispiel wird der Dichtkörper 9 am ersten Dichtabschnitt 12 in Lage gehalten, welcher Dichtabschnitt 12 Bestandteil eines Trägers 14 des Aufbaus 2 ist, der in etwa eine U-förmige Grundform mit aufrechten Schenkeln 15 und 16 und einem horizontalen Steg 17 aufweist; der Schenkel 15 bildet den ersten Dichtabschnitt 12. Vom Schenkel 16 des Trägers 14 ist ein horizontaler Tragflansch 18 weggeführt, der einen Verbindungsabschnitt 19 der Führungsschiene 7 trägt.

Der zweite Dichtabschnitt 13 ist mit einer Trägerinnenstruktur 20 des bspw. aus durchscheinendem Glas bestehenden Deckels 5 verbunden. Die Trägerinnenstruktur 20 umfasst einen U-förmigen Trägerabschnitt 21, der mit Schenkeln 22 und 23 versehen ist und einem Steg 24 versehen ist. Von den Schenkeln 22 und 23 sind ein innerer Tragflansch 25 und ein äußerer Tragflansch 26 weggeführt, wobei zwischen den Tragflanschen 25 und 26 und dem Deckel 5 Klebekörper 27 und 28 vorgesehen sind.

Am äußeren Tragflansch 26 ist ein Winkelelement 29 durch Schweißen, Kleben oder dgl. angebracht, das Z-Form aufweist. Ein freies End 30 des Winkelelements 29 ist mit einem Gleitprofil 31 aus geeignetem Werkstoff versehen, das in eine U-förmige Führungsaufnahme 32 der Führungsschiene 7 hineinragt.

## Patentansprüche

1. Dach für ein Kraftfahrzeug, insbesondere einen Personenwagen, mit einem verschiebbaren Deckel, der unter Zwischenschaltung von Führungselementen mit parallel zu einer Längsmittelebene des Personenwagens verlaufenden an einem Aufbau befestigten Führungsschienen zusammenarbeitet, wobei zwischen Deckel und Aufbau wenigstens ein Dichtkörper wirksam ist, **dadurch gekennzeichnet, dass** der Dichtkörper (9) zwischen aufrechten ersten Dichtabschnitten (12) und zweiten Dichtabschnitten (13) angeordnet ist und beim Verschieben des Deckels (5) entlang der die Führungselemente (6) aufnehmenden Führungsschienen (7 und 8) des Aufbaus (2) durch Keilwirkung (Kw) eine Arbeitsstellung (As) oder eine Ruhestellung (Rs) einnimmt.

2. Dach nach Anspruch 1, **dadurch gekennzeichnet, dass** der erste fest mit dem Aufbau (2) verbundene Dichtabschnitt (12) parallel zu einer der Führungsschienen (7 oder 8) verläuft und der zweite Dichtabschnitt (13) am Deckel (5) befestigt ist.

3. Dach nach den Ansprüchen 1 und 2, **dadurch gekennzeichnet, dass** der zweite Dichtabschnitt (12) von oben auf den Deckel (5) gesehen zur Bildung der Keilwirkung (Kw) im spitzen Winkel (ά) zu einer Längsebene (C-C) des Personenwagens (1) verläuft, die sich parallel zur Mittellängsebene (B-B) erstreckt.

4. Dach nach Anspruch 3, **dadurch gekennzeichnet, dass** die Keilwirkung (Kw) durch in Fahrzeuglängsrichtung (A-A) ausgerichtete Keillinien (K1 und K2) bewerkstelligt wird.

5. Dach nach Anspruch 3, **dadurch gekennzeichnet, dass** der spitze Winkel (ά) zwischen 0,5° und 3° beträgt.

6. Dach nach den Ansprüchen 1 und 2, **dadurch gekennzeichnet, dass** der Dichtkörper (9) an dem ersten Dichtabschnitt (12) in Lage gehalten wird.

7. Dach nach einem oder mehreren der vorangehenden Ansprüche, **dadurch gekennzeichnet, dass** der erste Dichtabschnitt (12) Bestandteil eines Träger (14) des Aufbaus (2) ist.

8. Dach nach Anspruch 7, **dadurch gekennzeichnet, dass** der Träger (14) in etwa eine U-förmige Grundform aufweist.

9. Dach nach einem oder mehreren der vorangehenden Ansprüche, **dadurch gekennzeichnet, dass** der Träger (14) zur Aufnahme der Führungsschiene (7 und 8) ausgebildet ist.

10. Dach nach einem oder mehreren der vorangehenden Ansprüche, **dadurch gekennzeichnet, dass** der zweite Dichtabschnitt (13) Bestandteil einer Trägerinnenstruktur (20) des Deckels (5) ist.

11. Dach nach einem oder mehreren der vorangehenden Ansprüche, **dadurch gekennzeichnet, dass** die Trägerinnenstruktur (20) mit einem Winkelelement (29) versehen ist, dessen freies Ende (30) mit einem Gleitprofil (31) in eine U-förmige Führungsaufnahme (32) der Führungsschiene (7 und 8) hineinragt.

## Claims

1. Roof for a motor vehicle, in particular a passenger car, having a movable cover which interacts, with the interposition of guide elements, with guide rails which run parallel to a longitudinal central plane of the passenger car and which are fastened to a vehicle body, with at least one sealing body acting between the cover and the vehicle body, **characterized in that** the sealing body (9) is arranged between upright first sealing portions (12) and second sealing portions (13) and, as the cover (5) is moved along the guide rails (7 and 8), which hold the guide elements (6), of the vehicle body (2), assumes a working position (As) or a rest position (Rs) by means of a wedging action (Kw).

2. Roof according to Claim 1, **characterized in that** the first sealing portion (12), which is fixedly connected to the vehicle body (2), runs parallel to one of the guide rails (7 or 8) and the second sealing portion (13) is fastened to the cover (5).

3. Roof according to Claims 1 and 2, **characterized in that,** in a view of the cover (5) from above, the second sealing portion (12) extends at an acute angle (α) in relation to a longitudinal plane (C-C), which extends parallel to the central longitudinal plane (B-B), of the passenger vehicle (1) in order to produce the wedging action (Kw).

4. Roof according to Claim 3, **characterized in that** the wedging action (Kw) is effected by means of wedge lines (K1 and K2) aligned in the vehicle longitudinal direction (A-A).

5. Roof according to Claim 3, **characterized in that** the acute angle (α) is between 0.5° and 3°.

6. Roof according to Claims 1 and 2, **characterized in that** the sealing body (9) is held in position on the first sealing portion (12).

7. Roof according to one or more of the preceding claims, **characterized in that** the first sealing portion (12) is a constituent part of a beam (14) of the vehicle body (2).

8. Roof according to Claim 7, **characterized in that** the beam (14) has an approximately U-shaped basic form.

9. Roof according to one or more of the preceding claims, **characterized in that** the beam (14) is designed to hold the guide rail (7 and 8).

10. Roof according to one or more of the preceding claims, **characterized in that** the second sealing portion (13) is a constituent part of a beam inner structure (20) of the cover (5).

11. Roof according to one or more of the preceding claims, **characterized in that** the beam inner structure (20) is provided with an angle element (29) whose free end (30) projects with a sliding profile (31) into a U-shaped guide receptacle (32) of the guide rail (7 and 8).

## Revendications

1. Toit pour véhicule automobile, en particulier une voiture particulière, avec un couvercle mobile, qui coopère avec des rails de guidage fixés à une superstructure et s'étendant parallèlement à un plan médian longitudinal de la voiture particulière, avec interposition d'éléments de guidage, dans lequel au moins un corps d'étanchéité est actif entre le couvercle et la superstructure, **caractérisé en ce que** le corps d'étanchéité (9) est disposé entre des premières parties d'étanchéité (12) et des deuxièmes parties d'étanchéité (13) dressées et il occupe une position de travail (As) ou une position de repos (Rs) par un effet de coin (Kw) lors du déplacement du couvercle (5) le long des rails de guidage (7 et 8) de la superstructure (2), qui contiennent les éléments de guidage (6).

2. Toit selon la revendication 1, **caractérisé en ce que** la première partie d'étanchéité (12) solidaire de la superstructure (2) s'étend parallèlement à un des rails de guidage (7 ou 8) et la deuxième partie d'étanchéité (13) est fixée au couvercle (5).

3. Toit selon les revendications 1 et 2, **caractérisé en ce que** la deuxième partie d'étanchéité (13), vue du haut sur le couvercle (5), s'étend sous un angle aigu (α) par rapport à un plan longitudinal (C-C) de la voiture particulière (1), qui s'étend parallèlement au plan médian longitudinal (B-B), afin de former l'effet de coin (Kw).

4. Toit selon la revendication 3, **caractérisé en ce que** l'effet de coin (Kw) est créé par des lignes obliques (K1 et K2) orientées dans la direction longitudinale du véhicule (A-A).

5. Toit selon la revendication 3, **caractérisé en ce que** l'angle aigu (α) est compris entre 0,5° et 3°.

6. Toit selon les revendications 1 et 2, **caractérisé en ce que** le corps d'étanchéité (9) est maintenu en place sur la première partie d'étanchéité (12).

7. Toit selon une ou plusieurs des revendications précédentes, **caractérisé en ce que** la première partie d'étanchéité (12) fait partie d'un support (14) de la superstructure (2).

8. Toit selon la revendication 7, **caractérisé en ce que** le support (14) présente environ une forme de base en U.

9. Toit selon une ou plusieurs des revendications précédentes, **caractérisé en ce que** le support (14) est conçu pour recevoir les rails de guidage (7 et 8).

10. Toit selon une ou plusieurs des revendications précédentes, **caractérisé en ce que** la deuxième partie d'étanchéité (13) fait partie de la structure intérieure de support (20) du couvercle (5).

11. Toit selon une ou plusieurs des revendications précédentes, **caractérisé en ce que** la structure intérieure de support (20) est pourvue d'un élément coudé (29), dont l'extrémité libre (30) s'engage avec un profil glissant (31) dans un logement de guidage en forme de U (32) des rails de guidage (7 et 8).
